# EUROPEAN PATENT APPLICATION

(11) **EP 4 654 545 A1**
(43) Date of publication of application: **26.11.2025**
(21) Application number: 25175721.7
(22) Date of filing: 12.05.2025
(51) Int. Cl.: H04L 41/14, H04L 41/16, H04W 24/00

(54) **NODE DUPLICATION**

(30) Priority: 23.05.2024 FI 20245659
(71) Applicant: Nokia Solutions and Networks Oy, 02610 Espoo (FI)
(72) Inventor: SATHYANARAYANAMURTHY, Kiran, Tumakuru (IN); KONECNY, Martin, Kurim (CZ)
(74) Representative: Nokia EPO representatives

(57) **Abstract**

According to an example aspect of the present invention, there is provided an apparatus comprising at least one processing core and at least one memory storing instructions that, when executed by the at least one processing core, cause the apparatus at least to store a set of transaction contexts of transactions a network function has begun with a correspondent node, initiate, based at least in part on the set of transaction contexts, a digital model of the correspondent node, and based on an error the network function encounters in a messaging sequence with the correspondent node, replicate at least partly the messaging sequence in the digital model of the correspondent node.

## Description

### FIELD

The present disclosure relates to data networking, such as, for example, fixed networks or cellular communication networks.

### BACKGROUND

In communication networks, standardization of interfaces enables obtaining a functioning overall network using nodes manufactured by plural distinct manufacturers, a situation referred to as a multi-vendor network. Whether a multi-vendor or a single-vendor network, occasionally problems arise when operating the network, as not all communication scenarios and message sequences involving plural nodes can be completely analysed and prepared for in advance.

Determining a cause of an error state in a communication network may be straightforward or cumbersome, depending on the specific context and nature of the error state.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core and at least one memory storing instructions that, when executed by the at least one processing core, cause the apparatus at least to store a set of transaction contexts of transactions a network function has begun with a correspondent node, initiate, based at least in part on the set of transaction contexts, a digital model of the correspondent node, and based on an error the network function encounters in a messaging sequence with the correspondent node, replicate at least partly the messaging sequence in the digital model of the correspondent node.

According to a second aspect of the present disclosure, there is provided a method comprising storing a set of transaction contexts of transactions a network function has begun with a correspondent node, initiating, based at least in part on the set of transaction contexts, a digital model of the correspondent node, and based on an error the network function encounters in a messaging sequence with the correspondent node, replicating at least partly the messaging sequence in the digital model of the correspondent node.

According to a third aspect of the present disclosure, there is provided an apparatus comprising means for storing a set of transaction contexts of transactions a network function has begun with a correspondent node, initiating, based at least in part on the set of transaction contexts, a digital model of the correspondent node, and based on an error the network function encounters in a messaging sequence with the correspondent node, replicating at least partly the messaging sequence in the digital model of the correspondent node.

According to a fourth aspect of the present disclosure, there is provided a non-transitory computer readable medium having stored thereon a set of computer readable instructions that, when executed by at least one processor, cause an apparatus to at least store a set of transaction contexts of transactions a network function has begun with a correspondent node, initiate, based at least in part on the set of transaction contexts, a digital model of the correspondent node, and based on an error the network function encounters in a messaging sequence with the correspondent node, replicate at least partly the messaging sequence in the digital model of the correspondent node.

### BRIEF DESCRIPTION OF THE DRAWINGS

FIGURE 1 illustrates an example system in accordance with at least some embodiments of the present invention;
FIGURE 2A illustrates an example system in accordance with at least some embodiments of the present invention;
FIGURE 2B illustrates an example system in accordance with at least some embodiments of the present invention;
FIGURE 2C illustrates an example transaction context data resource in accordance with at least some embodiments of the present invention;
FIGURE 2D illustrates an example signalling sequence in accordance with at least some embodiments of the present invention;
FIGURE 2E illustrates initialization of a digital model of a node, in accordance with at least some embodiments of the present invention;
FIGURE 3 illustrates an example apparatus capable of supporting at least some embodiments of the present invention, and
FIGURE 4 is a flow graph of a method in accordance with at least some embodiments of the present invention.

### EMBODIMENTS

Disclosed herein are methods to facilitate error analysis in networks by initiating digital models of network nodes, using in this initiating of the digital models information on the network nodes which is present in one or more transaction contexts. Using the information from the transaction contexts provides a more accurate digital model of a network model than merely relying on logs or data samples, wherefore also error analysis using the digital models is likelier to succeed. Thus overall error handling in the network is enhanced and sped up, compared to analysing errors without digital models of the network nodes, or using digital models of the network nodes which are initialized without using the information in the transaction contexts, for example by relying on logs and data samples. Error analysis using the digital models initialized using also the information from the transaction contexts is thus capable of correctly analysing a broader range of different error states, yielding a technical benefit.

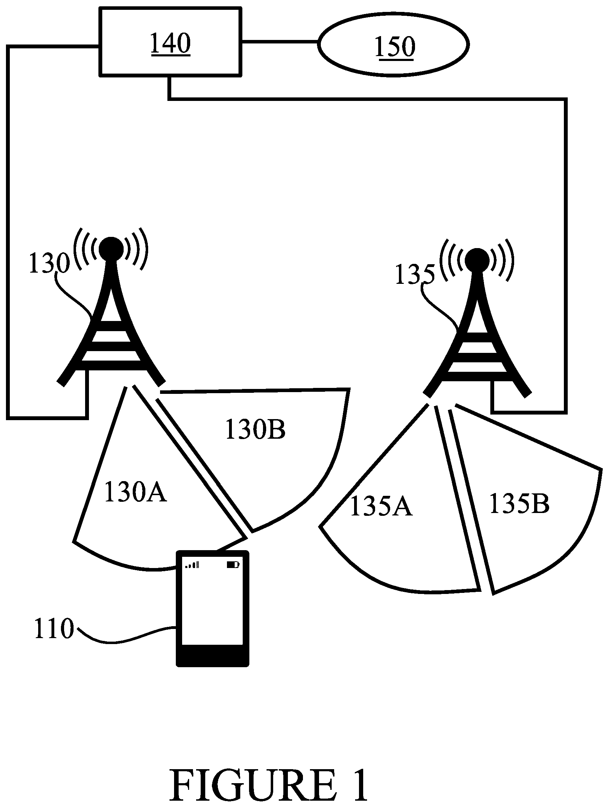

FIGURE 1 illustrates an example system in accordance with at least some embodiments of the present invention. This system includes base stations 130, 135 in communication with UEs, such as UE 110. A radio link connects base station 130 with UE 110. The radio link may be bidirectional, comprising an uplink, UL, to convey information from UE 110 toward base station 130, and a downlink, DL, to convey information from the base station 130 toward UE 110. A cellular communication system may comprise hundreds or thousands of base stations, of which only two are illustrated in FIGURE 1 for the sake of clarity of the illustration. The base stations may be distributed in that they comprise a centralized unit, CU, and one or more distributed unit, DU. A base station is an example of a base node.

Base station 130 is further coupled communicatively with core network node 140, which may comprise, for example, a mobility management entity, MME, home subscriber server, HSS, unified data repository, UDR, call session control function, CSCF, or access and mobility management function, AMF. The core network node 140 may be coupled with further core network nodes, and with a network 150, which may comprise the Internet or a corporate network, for example. The system may communicate with further networks via network 150. Examples of the further core network nodes, which are not illustrated in FIGURE 1 for the sake of clarity, include gateways and subscriber information repositories. Core network nodes may be virtualized in the sense that they may run as software modules on computing substrates, such that more than one virtualized network node may run on a same computing substrate. The network may be configured to function in accordance with a suitable cellular standard such as long term evolution, LTE, fifth generation, 5G, which is also known as New Radio, NR, or sixth generation, 6G standards as defined by the the 3^{rd} generation partnership project, 3GPP. To obtain interoperation, UEs attaching to the network are configured to support a same standard as the network.

Base station 130 controls, in the example of FIGURE 1 cells 130A and 130B, of which UE 110 is in the situation illustrated in FIGURE 1 attached with cell 130A, and base station 135 controls, in the example of FIGURE 1, cells 135A and 135B. The number of cells, or beams, may be in excess of what is illustrated in FIGURE 1. It is also possible that a base station has a single cell or beam. While illustrated as sector-shaped, cells of a same base station may be omnidirectional and operate on different frequencies, for example. A mobility event may comprise a switch from one beam to another beam of the same cell, or a switch from one cell to another cell. To support mobility procedures, UEs, including UE 110, are configured to conduct mobility measurements to measure signal strengths of adjacent beams and/or cells, and report results of these measurements to the network, which may then take a decision concerning a mobility event, such as a beam change or a cell switch.

The digital models as described herein may represent network nodes such as those mentioned above, such as a CSCF, a HSS, a base station or an UDR, for example. In some cases a digital model may be initialized to represent a UE. The digital model is not a one-to-one replica of the node it models, rather, it is sought to define the digital model in terms of the features of the node that are relevant to finding causes of error states and other features need not be modelled in the digital model. The node modelled by the digital model may be a network function, NF. A transaction context may comprise, for example, identities of the node and its correspondent node, counters used to maintain packet order, security information used to maintain security procedures of the transaction, state variables concerning ongoing transactions and timers concerning the transaction context. Examples of transaction contexts include transmission control protocol, TCP, contexts, real-time transport protocol, RTP, contexts and UE contexts. UE contexts include information used to maintain radio-access network services towards a UE. At least UE state information, security information, UE capability information and the identities of a UE-associated logical S1-connection may be included in a UE context maintained in a radio-access network. Also simpler transactions may generate contexts useful in initializing, that is creating, the digital models of the network nodes.

Problems may occur even in standard-compliant network environments. Implementation details of communication partner network functions, NFs, may be difficult to analyse unless the NF under consideration is subjected to purposefully designed messaging sequences to replicate failures or errors, which can then be understood and corrected. This fail->detect->correct process may be inefficient if the problems are random and specific to vendor implementations or random timing effects. Sometimes human efforts are needed to debug such problems in live networks, which can result in insufficient diagnosis, chains of errors and excessive time delays in addressing problems. Time delays may result in a lower availability rate for the network.

The present disclosure describes methods to playback a communication event using digital twin instances, referred to as digital models, of communication partner NFs. A node accesses transaction context(s) to spawn the digital model and, optionally, improve its behaviour gradually, for example via reinforcement machine learning techniques, by mining the transaction processing context data and data sets related to the transactions. The digital model may be initiated as a cloud native function, for example. The node spawning the digital model may obtain transaction context data relating to the modelled node from more than one correspondent node of the modelled node.

The following problems may be addressed. Firstly, NF behaviour under different feature activation of a correspondent NF may be investigated. For example, activating a new feature that can induce an optional or mandatory payload in a signalling message. Secondly, NF behaviour under different networking conditions of a correspondent NF may be investigated. For example, delays, big packets, fast responses impacting state machines, no responses, roaming conditions etc. Thirdly, NF behaviour under different load conditions may be investigated. For example, authentication flood, monitoring flood, OAM data flood, floods due to bulk provisioning. Fourthly, detection of network race conditions when data of the same targeted user is being modified by several network events in distributed NFs. By race conditions it is meant situations where more than one message of a same type proceeds during the same time interval in the network, and it is not certain which one will arrive first. The order of arrival may affect node behaviour. For example, a multi-SIM UE can fork a call leading to multiple signalling messages on same UE. Fifthly, prediction of behaviours under certain boundary conditions, such as varying the connection numbers on a service to analyse the end-to-end behaviour. Sixthly, security on all interfaces may be enabled to see the effect on performance. Seventhly, detection of a problem in a live network may be attempted, when the reported issue cannot be found in lab conditions, by adding a software module to the live network, because it is not possible to replicate in the lab the same network setup as the customers have in their live network. An example of this is 4G-5G handover ping-pong effect due to increased signalling.

Certain classes of problems may thus be substantially understood by initializing a digital model of a peer NF by learning peer NF information from a source NF. For example in a service based interface case, a consumer NF can learn information of a producer NF using transaction context(s) and, optionally, also a request message. Alternatively, a producer NF can learn information on the consumer NF based on transaction context(s) and, optionally, a response message received from the consumer NF. A consumer NF may be a client and a producer NF may be a server, for example.

In certain cases, such as high load and race conditions, messaging sequence playback is cumbersome and efforts to reproduce a failure may fail. Examples of race conditions include multi-SIM IP mobility subsystem, IMS, calls with forking and a vendor using a message sequence which may vary non-deterministically due to latency in the network. If UDM is from vendor-A and AMF is from vendor-B, a vendor-A node may create a digital model of the vendor-B AMF by utilizing a UDM context, including knowledge of supported features and configuration. The configuration may comprise security, connections, response timeouts, latency tolerance and timestamps of message arrivals.

The AMF sends signalling messages to UDM, and UDM performs transaction processing. The UDM performs authentication and stores the AMF name, request message(s), connection details in a transaction context relating to the AMF, and using these details it is possible to create a digital model of the AMF (or NEF) instance from information in the UDM. The transaction contexts may be accessed by a digital modelling controller which can create the digital model(s).

In other words, it is possible to automatically, without user intervention, create a digital model of a partner NF using transaction context information, which is provided to a digital modelling controller which is configured to create the digital model. The signalling traffic, that is, a messaging sequence, leading to a chain of events may then be replicated to the digital model to facilitate adaptation to the real NF. A digital model may additionally or alternatively be created also using artificial intelligence or machine learning models, using the partner NF transaction context information, for example by locating large language model, LLM, instances and querying the NF LLM instance. In the ML model, Q-values relating to predicting the NF behaviour may be derived by accessing the transaction context and applying the signalling on test subscriptions, for example. Also in the absence of machine learning solutions, information obtained by querying, for example by using LLM, may be used in the initializing of the digital model of the node that is queried. Information so obtained may comprise, for example, environmental information or configuration information, or transaction information, of the node.

On the other hand when the machine learning solution is used in the querying, the querying may be based on a rule-based machine learning model, wherein the rules may be evolved based on network dynamics and peer network capabilities realized as new functional and performance, security impactive features. Such model exists in NF scope with algorithms for rule extraction ex. using decision tree induction, association rule mining, and rule-based classifiers executed on data sets. In detail, the rules may be changed based on a load change in the network, such as an increase or decrease in the load, based on a number of connections to peer NFs increasing or decreasing, based on a peer NF activating features related to signalling efficiency or support of features such as restoration or use of shared data. Further, the rules may be changed based on changes in network topology, such as a change in a number of peer NFs, latency or route optimizations, upgrades in a peer NF, security enhancements being rolled out, or IP address changes. Further, the rules may be changed based on changes in traffic patterns from peer NFs, such as, for example, increased frequency or authentication requests.

The digital modelling controller may be configured to replicate, at least in part, a messaging sequence which preceded an error in the network function which is modelled in the digital model. Thus the cause of the error may be analysed by observing the internal state of the digital model during and after the replicating of the messaging sequence. A remedial action may be generated and implemented automatically, without human intervention, in the network. Alternatively, the internal state of the digital model may be presented to a human operator, to thus convey to the human operator technical information on the internal state of the network.

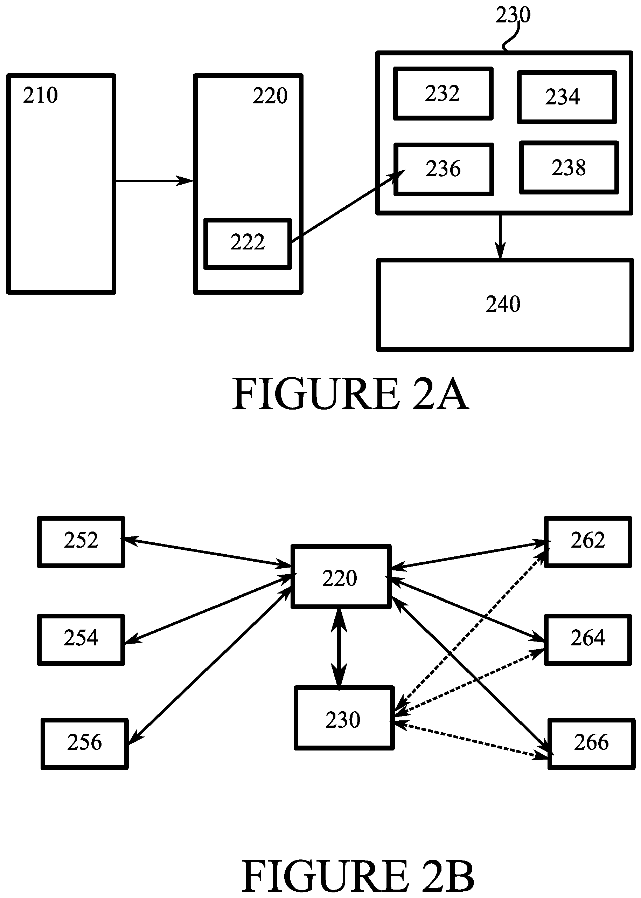

FIGURE 2A illustrates an example system in accordance with at least some embodiments of the present invention. A real CSCF 210 is in communication with a real UDM node 220, such that UDM node 220 stores transaction context information 222 relating to transactions it has with CSCF 210. Digital modelling controller 230 comprises an NF model 232, a simulator 234, a model of a physical process 236 and NF information database 238. The internal structure of digital modelling controller 230 is an implementation example to which the disclosure is not limited, rather, as the skilled person can understand, digital modelling controller 230 may be arranged in plural different ways and still behave as herein described. NF model 232 acts as a node template and may be configured based on, for example, a producer/consumer pattern with service based interface, SBI, support and hypertext transfer protocol, HTTP, support. Simulator 234 may be based on artificial intelligence, AI, methods, for example. Process model 236 may be based on message queues, sender, receiver or listener threads and context management. NF information database 238 may store, for example, typical behaviours, expected functions and other information, which may be derived from a LLM instance. Digital modelling controller 230 is configured to generate digital model 240 of CSCF 210, based at least in part on transaction context information 222.

Digital model 240 may contain, generally and not relating only to FIGURE 2A, many different types of information: supported features, configuration information, security configurations, service information, API versions, and/or special features injected via SBI headers. The digital model may be a partial digital model in that it comprises overall less information than the network node that it models.

FIGURE 2B illustrates an example system in accordance with at least some embodiments of the present invention. Like numbering denotes like structure as in FIGURE 2A. On the left are real network functions, NFs, 252, 254 and 256. The number of NFs may of course differ from the three illustrated in FIGURE 2B. UDM 220, which is a network function, is configured to use transaction contexts when communicating with NFs 252, 254, 256. Digital modelling controller 230 is configured to obtain the transaction contexts from UDM 220 and to store them. Digital modelling controller 230 is further configured to initiate, based at least in part based on the set of transaction contexts it has received from UDM 220, digital models of each of the correspondent nodes 252, 254, 256 of UDM 220. Based an error being detected by UDM 220 in a messaging sequence with one of the correspondent nodes 252, 254, 256, digital modelling controller 230 may replicate, at least partly, the messaging sequence in the respective digital model 262, 264, 266 of the correspondent node 252, 254, 256 with which the error was detected. The transaction contexts are formulated based on the real peer-NF signalling messages, database access, OAM access and other correspondent-NF communications relating to a transaction data chain.

The arrangement of FIGURE 2B is an example, in that the node which detects the error in the messaging sequence need not be an UDM, and digital modelling controller 230 may obtain the transaction contexts of NFs other than UDMs, to initiate the digital models of the correspondent nodes thereof. An API between digital modelling controller 230 and UDM 220 may be based on REST principles, for example.

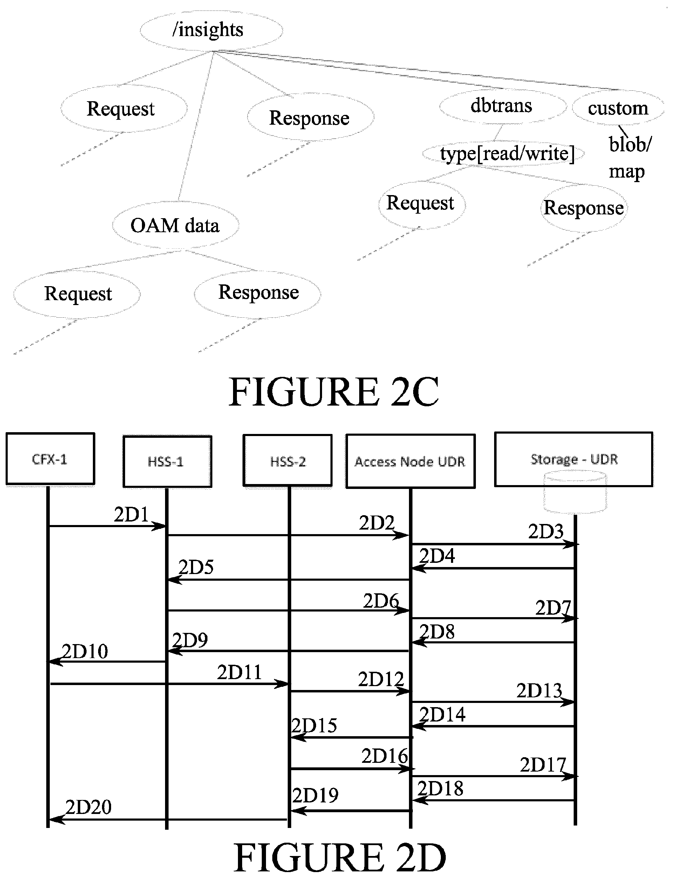

FIGURE 2C illustrates a transaction context data resource in accordance with at least some embodiments of the present invention. The digital modelling controller may obtain a trigger from OAM or from a real NF based on a specific signaling event or a provisioning event in a subscriber profile or subscriber profile provisioned to trigger a digital modelling controller to retrieve transaction context data fulfilling certain criteria. The real NF may expose an interface to the digital modelling controller, for example for this retrieval, for example as:

```
NF-Insight-Get-Trans-Ctx, NF-Insight-Push-Trans-Ctx
           .../insights/request/s1
      .../insights/response/s1
```

This example API execution output may be used by the digital modelling controller in the spawning of a digital model of a node with minimal, or no, human interaction. There can be custom data that can include the timer details, intent specific configuration details, which may be fetched using custom resource modelled as blob or map. The digital modelling controller may use a rule-based system, event driven system or a machine learning based system which uses transaction context data from the real node's correspondent node to initialize digital models of the real node's communication partner.

FIGURE 2D illustrates an example signalling sequence in accordance with at least some embodiments of the present invention. In this case, a customer may complain that a call fails due to a multi-SIM subscription forking case, by which it is meant that two subscriptions alert when a call is incoming to one of these subscriptions. To analyze this sequence, a playback of events with several permutations and combinations on those impacted multi-SIM subscribers may be performed to assist detailed debugging.

In FIGURE 2D, the example of an IMS network is depicted, however in principle a similar procedure can be applied on any type of network with interfaces based on any protocol. The advantages are most prominently visible in the network where cloud native network functions are deployed. In FIGURE 2D, there are two subscriber identity modules, SIMs, of a multi-SIM subscriber requesting registration of these subscription. The CFX, namely a CSCF, sends the signaling messages to different distributed HSS nodes, and these HSS nodes will access the subscriber from UDR for transaction processing. For registration flows there can be user-authorization-request/user-authorization-answer, UAR/UAA, multimedia-authentication-request/multimedia-authentication-answer, MAR/MAA, UAR/UAA and server-assignment-request/ server-assignment -answer, SAR/SAA, messages for a SIM. In FIGURE 2D, S11-req/S11-res can map to Cx-SAR/SAA between CFX and HSS for corresponding public user identity, PUID.

If a public identity is shared with both SIMs and if CFX sends the SAR with a public identity that needs to get restoration data, then there are cases where due to network delay or processing delay the latest registration can receive stale data when a parallel registration is being performed on same resource, the subscriber profile states are stored in nodes as shown and during SIM2 registration still data updated during the state S1, which is the state when the subscriber is registered in IP Multimedia subsystem, IMS, serving CSCF, is being sent, this can lead to call failure. By restoration data it is herein meant information required for the CSCF to handle traffic for a registered user. This information is stored in HSS(Register) and if lost, retrieved by the serving CSCF. This data contains the list of session initiation protocol, SIP, proxies in the path, such as a proxy CSCF address. The data further may contain the contact information (contact addresses and contact header parameters). This information is associated with the private user identity and the implicit registration set that is affected by the SAR request. Stale data may be stale restoration data or stale registration data, wherein data can become stale if the due to race condition the latest update on subscriber profile at time T2 is overridden by an older update operation at time T1 where, T2 > T1 considering network delay or processing delay.

Such a situation may be difficult to debug as propagation delays in the network are random and events from multi-SIMs are not deterministic in nature. Further, it is not obvious how to capture only the needed data that is becoming stale in a heavily loaded system. This data may be part of a transaction context, used as a resource in the initialization of the digital model(s) and fetched e.g. via an application programming interface, API.

In a system using digital models of nodes initiated based in transaction context data the above complete event chains can be played back by twinning the CFX-1 from HSS perspective.

In phase 1D1, CFX sends a SIM1 registration request to HSS-1, which responds by sending, phase 2D2, a database read request to UDR, which responds, phase 2D3, by querying storage UDR. Storage UDR response to UDR in phase 2D4, which forwards the read result, phase 2D5, to HSS-1. HSS-1 then requests a write to the database, phase 2D6, from UDR. UDR performs the write in phase 2D7, and receives an acknowledgement of the write in phase 2D8. UDR informs HSS-1 of the write in phase 2D9, and HSS-1 in response informs CFX in phase 2D10.

Phases 2D11 - 2D20 are a similar signalling flow as phases 1D1 - 2D10, however performed for SIM2 rather than SIM1. The SIM2 flow is performed with HSS-2 rather than HSS-1. Since in IMS there is concept of implicit registration set, IRS, for public identifiers, and these public identifiers can be distinct public identifier or non-distinct public identifier belonging to wildcard public identifier, it may be possible that these public identifiers belonging to same IRS can perform registration, deregistration, restoration data update and deletion in parallel as these can be initiated by different processes of peer NF or several peer NFs. This may create a race condition when such signalling events reach various HSS and create a sequence of events that can make subscriber profile states inconsistent, for example deregistration can succeed the registration and make profile deregistered which in fact was registered.

There may be other application servers which request from the HSS the subscriber registration state and due to previous race condition, the application server may receive inconsistent responses that can lead to call failures or delays. Other cases leading to such situations, such as application server subscribe for monitoring events and unsubscribe requests, parallel signalling activities on subscription like registration, deregistration, data pull, data push exist as well.

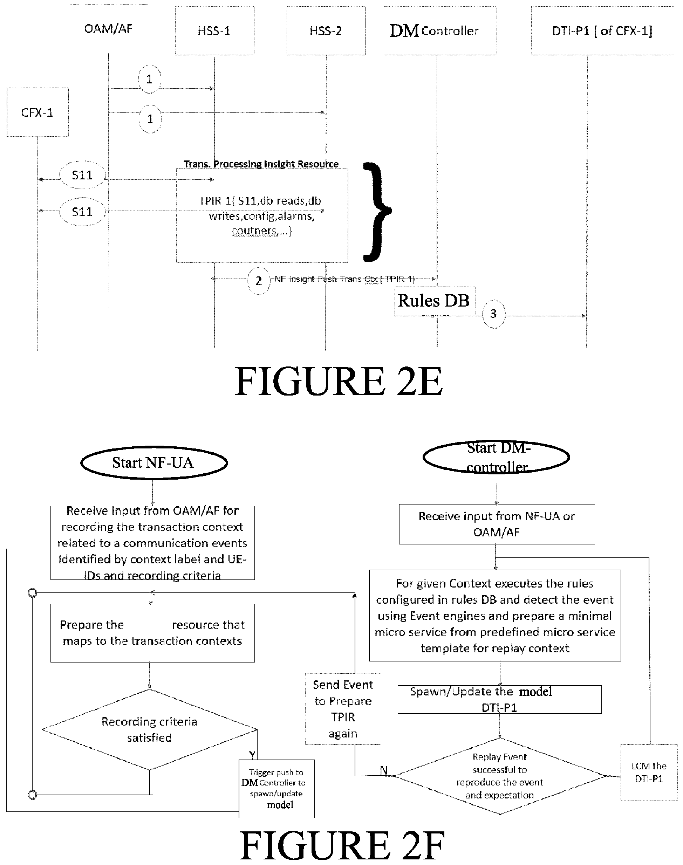

FIGURE 2E illustrates initialization of a digital model of a node, in accordance with at least some embodiments of the present invention. Initially, marked (1), an operator invokes the OAM to create this multi-SIM registration context via a provisioning command for given subscriber(s). The OAM sends the trigger (1) to HSS-1 and HSS-2 to start recording the transaction context for the multi-SIM subscriber for specified criteria such as time and patterns of signaling messages, for example. Subsequently, HSS-1 and HSS-2 collect transaction context information, as per usual functioning in a network. The transactions may comprise database reads, database writes, configurations, alarms, counters and protocol connections, for example. S22 is a signalling message from a peer NF. TPIR-1 is a transaction processing insights resource, which may be stored in a common database such as an unstructured data storage function, UDSF, for example.

After enough transaction context data is collected, HSS-1 supplies the transaction context to digital modelling controller "DM controller", marked (2). The digital modelling controller initializes a digital model, marked "DTI-P1", of the CFX-1 in the phase marked (3) in FIGURE 2E. Digital modelling controller "DT-controller" may use a rules database and/or event driven engine in the initialization of this digital model. When the digital model of the CFX-1 is created by the digital modelling controller, the digital model may announce its readiness to the digital modelling controller or to any central repository so that replicating a message sequence may be performed using it. In general, the digital models may be generated and initialized before problems occur in the network, such that they are available once a problem is detected for prompt debugging. In some embodiments, the generated and initialized digital models are updated as the transaction context information develops, before the error is detected, so that the digital models are up-to-date.

In detail, the messaging sequence of FIGURE 2D may be performed, such that the digital modelling controller prompts the digital model DTI-P1 to act as the CFX-1 in FIGURE 1D. After the messaging sequence is complete, an internal state of digital model DTI-P1 may be analysed to determine a possible cause of the error determined to exist in the live network. Plural digital models may be created, each created digital model corresponding to a distinct correspondent node.

It is of interest, in general and not relating only to FIGURE 2E, that the digital modelling controller may gather information for the initializing of a digital model of a node by querying from the node directly, and thus the digital modelling controller is not restricted to using only the transaction context information. The querying may be based on a large language model, for example, or on another query mechanism. The node itself has access to a lot of internal data which is very useful in the initialization of the digital model of this node. For example, the queries data may be data of an internal state machine and may comprise triggering events, timers, queries, a subscriber profile, filters and/or software version data, for example. The querying may take place before the error is detected, and the querying may be repeated after the digital model is initialized to update the digital mode, before the error is detected in the network.

Further, in addition to the transaction contexts and, optionally, the data queries directly from the node to be modelled, the initiating of the digital model of the correspondent node may be based on at least one of a domain specific rule set, or a set of domain specific event models. The domain may correspond to a cellular network, for example.

The digital modelling controller, or another node, may perform an automated debugging operation on the digital model of the correspondent node, wherein one or more error template is compared to data logged from the digital model during the replicated messaging sequence, wherein responsive to the logged data matching the one or more error template, the apparatus is configured to issue an alert which comprises an identifier of the error template which matches the logged data. The replicating of the at least part of the messaging sequence in the digital model of the correspondent node may comprise introducing random or pseudorandom delays to arrival times of messages comprised in the messaging sequence. These random or pseudorandom delays are useful in debugging race conditions. The digital modelling controller may be run in a core network of a cellular network, for example.

FIGURE 2F is a flow graph in accordance with at least some embodiments of the present invention. Processing in FIGURE 2F begins at the top left and top right. From the top left, input is first received in the NF-UA (user agent) from OAM or an application function, AF, to record transaction contexts related to communication events identified by a context label and/or UE identities and/or recording criteria. In some embodiments, the nodes store the contexts even without being instructed to do so. Processing advances to the following stage, where a resource is prepared which maps to the transaction contexts. This mapping is a mapping of a transaction context to a specific subscriber profile. For example, if the user is identified by a specific identity, such as, for example, IMS public user identity, IMPU, IMS private user identity IMPI, international mobile subscriber identity, IMSI, mobile station integrated services digital network, MSISDN, or an external identity, the user identifier may be the key, and the mapping value is the transaction context that comprises signalling event(s), timer(s), subscriber profile read(s) / update(s) or, optionally, the mapping value may be information on other serving nodes contacted as part of the parent transaction peer information. When recording criteria are satisfied, for example when enough transaction context data has been obtained, the transaction context data is sent to the digital modelling controller, DM-controller, to initialize the digital model of the relevant node. On the top right, the transaction context data is received, and then the DM controller executes a rule of a rules database and detects an event, such as a registration event, using an event engine to prepare a digital model, such as a microservice, from a predefined model template for replay context. An event engine may be a processing element or function in the digital modelling controller which analyses a transaction context and determines which network signalling event it represents. Examples of network signalling events include registration, deregistration, authentication, subscriber data fetch, subscriber data pull, notification, feature activation and location update. A signalling event may be a combination of e.g. two of the example signalling events listed above.

The event, that is the messaging sequence, is replayed with the digital model to enable monitoring the digital model's internal state to better understand the error. Information on the digital model's internal state may be presented to human operators to increase their awareness of the technical state of the real network.

If the DM controller needs still more data for learning the events to learn the peer NF to create its digital model, it can ask NF to repeat TPIR, which can happen if there isn't sufficient information to create the digital model of the peer NF.

LCM the DTI-P1 means life cycle management of the created digital model of the peer. This is usually performed by an orchestrator which creates the digital model, which can scale in or scale out the digital model, modify or update the digital model when more properties are extracted from TPIR and when the usage of digital model is removed.In some embodiments, a minimum black box system produces a transaction context structure. With the example pattern:

```
 {
   1. input message received.
   2. extract key parameters.
   3. use key parameter to search the subscriber.
   4. search the subscriber.
   5. perform business logic execution using step 2,4
   6. update the subscriber.
   7. perform peer NF queries.
   8. perform business logic execution on peer NF responses.
   9. send final response.
 }
```

This context is used as a resource in the construction of the digital model. The transaction context structure may be traced with a key including the context label + subscriber identity this key is passed through the transaction chains to produce the necessary and sufficient data to replicate the context. The digital modelling controller may be configured to prepare models as including plugins from a factory of raw service templates to produce the peer NF digital model based at least partly on the transaction context data. The digital modelling controller may invoke cloud native function, CNF, life cycle management to perform placement of micro services based on information in the context or configured in the rule DB. Concerning replicating the context, a template of peer NF digital model may comprise common reusable components, such as a dispatching element comprising a signalling message transmitter and receiver functions. In memory database for context management, a timer module is a software module with a consumer pattern usable in handling signalling message processing and bootstrapping configuration, for example. Specific business logic pertaining to playback event may be generated based on a TPIR. These components are modelled as using Function as a service concept to create a digital model microservice of the peer.

In another aspect the digital modelling controller may contact a large language model instance in this case the CFX large language model instance and obtain from it useful deployment and configuration information that can facilitate creation of the digital model of the CFX.

In certain cases, the digital model needs to closely match the real NF to successfully simulate it in a high load situation. To accomplish this, reinforcement learning, RL, may be used to get optimized characteristics of the real NF to embed the same characteristic to the digital model thereof.

As described herein above, microservices and cloud native functions may be used with programmability. Using NF data to produce a communication partner NF digital model of a given NF using the transaction context(s). The communication partner NF digital model may be stored and used in the network operator's domain, and the model may be further updated with e.g. a dynamic plugin-based mechanism. The digital model may be used to playback a messaging sequence, for example automatically without human intervention, with observed traffic replication. This helps serviceability and operator personnel, in that the personnel may be presented information on the digital model's internal state after the message sequence has been replayed. This assist in inspecting node behavior when signaling under certain conditions, for example if a failure is due to a race condition or data corruption when the target subscriber data is modified at near real time by several peers.

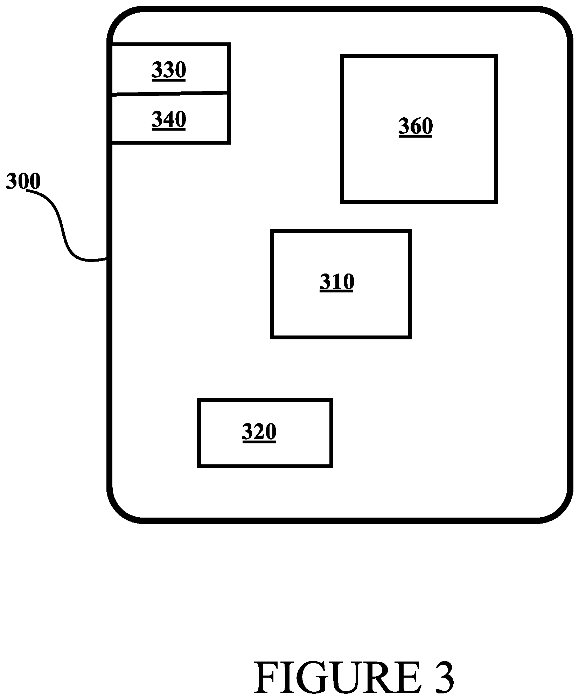

FIGURE 3 illustrates an example apparatus capable of supporting at least some embodiments of the present invention. Illustrated is device 300, which may comprise, for example, an apparatus running a core network node, the apparatus being configured to initialize digital models of nodes. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. A processing core or processor may be, or may comprise, at least one qubit. Processor 310 may comprise at least one AMD Opteron and/or Intel Core processor. Processor 310 may comprise at least one application-specific integrated circuit, ASIC. Processor 310 may comprise at least one field-programmable gate array, FPGA. Processor 310, optionally together with memory and computer instructions, may be means for performing method steps in device 300, such as storing, processing and re-configuring, for example. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may be a computer readable medium. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part external to device 300 but accessible to device 300. Memory 320 may be transitory or non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with a suitable communication arrangement, such as Ethernet or Diameter, for example.

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to configure network parameters, to manage digital files stored in memory 320 or on a cloud accessible via transmitter 330 and receiver 340.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340, and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

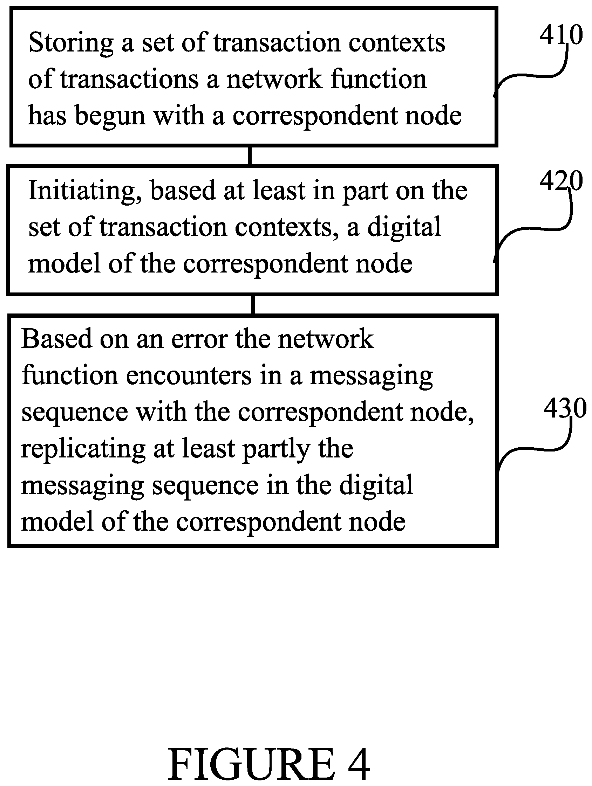

FIGURE 4 is a flow graph of a method in accordance with at least some embodiments of the present invention. The phases of the illustrated method may be performed in the digital modelling controller, for example, or in a control device configured to control the functioning thereof, when installed therein. The method may be performed by one apparatus or a system comprising plural nodes, which may be physical nodes or logical nodes.

Phase 410 comprises storing a set of transaction contexts of transactions a network function has begun with a correspondent node. Phase 420 comprises initiating, based at least in part on the set of transaction contexts, a digital model of the correspondent node. Finally, phase 430 comprises, based on an error the network function encounters in a messaging sequence with the correspondent node, replicating at least partly the messaging sequence in the digital model of the correspondent node.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

### INDUSTRIAL APPLICABILITY

At least some embodiments of the present invention find industrial application in network management.

### ACRONYMS LIST

- 3GPP: 3^{rd} generation partnership project
- AF: application function
- AMF: access and mobility management function
- CSCF: call session control function
- HSS: home subscriber server
- NF: network function
- OAM: operations, administration and maintenance
- RTP: real-time transport protocol
- TCP: transmission control protocol
- UDR: unified data repository
- UE: user equipment

## Claims

1. An apparatus comprising at least one processing core and at least one memory storing instructions that, when executed by the at least one processing core, cause the apparatus at least to:
- store a set of transaction contexts of transactions a network function has begun with a correspondent node;
- initiate, based at least in part on the set of transaction contexts, a digital model of the correspondent node, and
- based on an error the network function encounters in a messaging sequence with the correspondent node, replicate at least partly the messaging sequence in the digital model of the correspondent node.

2. The apparatus according to claim 1, configured to initiate plural digital models of plural correspondent nodes of the network function, each one of the digital models being initiated based at least in part on a respective set of transaction contexts of transactions the network function has begun with a respective one of the correspondent nodes.

3. The apparatus according to claim 1 or 2, wherein the apparatus is configured to initiate the digital model of the correspondent node as a cloud native function.

4. The apparatus according to any of claims 1 - 3, configured to perform the initiating of the digital model of the correspondent node based on querying data from the correspondent node.

5. The apparatus according to claim 4, wherein the querying is based on a large language model.

6. The apparatus according to any of claims 1 - 5, configured to perform the initiating of the digital model of the correspondent node based on at least one of a domain specific rule set, or a set of domain specific event models.

7. The apparatus according to any of claims 1 - 6, further configured to perform an automated debugging operation on the digital model of the correspondent node, wherein one or more error template is compared to data logged from the digital model during the replicated messaging sequence, wherein responsive to the logged data matching the one or more error template, the apparatus is configured to issue an alert which comprises an identifier of the error template which matches the logged data.

8. The apparatus according to any of claims 1 - 7, configured to perform the replicating of the at least part of the messaging sequence in the digital model of the correspondent node by introducing random or pseudorandom delays to arrival times of messages comprised in the messaging sequence.

9. The apparatus according to claim 8, configured to perform the replicating of the at least part of the messaging sequence in the digital model of the correspondent node more than once, generating new random or pseudorandom delays to each message in each repetition of the replicated messaging sequence.

10. The apparatus according to any of claims 1 - 9, wherein the correspondent node is a call session control function of a cellular communication network.

11. The apparatus according to any of claims 1 - 10, wherein the apparatus is configured to operate as part of a cellular core network.

12. A method comprising:
- storing a set of transaction contexts of transactions a network function has begun with a correspondent node;
- initiating, based at least in part on the set of transaction contexts, a digital model of the correspondent node, and
- based on an error the network function encounters in a messaging sequence with the correspondent node, replicating at least partly the messaging sequence in the digital model of the correspondent node.

13. The method according to claim 12, comprising initiating plural digital models of plural correspondent nodes of the network function, each one of the digital models being initiated based at least in part on a respective set of transaction contexts of transactions the network function has begun with a respective one of the correspondent nodes.

14. The method according to claim 12 or 13, wherein the method comprises initiating the digital model of the correspondent node as a cloud native function.

15. A non-transitory computer readable medium having stored thereon a set of computer readable instructions that, when executed by at least one processor, cause an apparatus to at least:
- store a set of transaction contexts of transactions a network function has begun with a correspondent node;
- initiate, based at least in part on the set of transaction contexts, a digital model of the correspondent node, and
- based on an error the network function encounters in a messaging sequence with the correspondent node, replicate at least partly the messaging sequence in the digital model of the correspondent node.
